**Europäisches Patentamt**

**European Patent Office**

**Office européen des brevets**

(19)

(11) Veröffentlichungsnummer: **0 321 644 B1**

(12) **EUROPÄISCHE PATENTSCHRIFT**

(45) Veröffentlichungstag der Patentschrift: **25.09.91**

(51) Int. Cl.5: **E04B 1/94**

(21) Anmeldenummer: **88109292.8**

(22) Anmeldetag: **10.06.88**

(54) **Feuer- und rauchdichter Verschluss für Wanddurchbrüche.**

(30) Priorität: **23.12.87 DE 8716909 U**

(43) Veröffentlichungstag der Anmeldung:
**28.06.89 Patentblatt 89/26**

(45) Bekanntmachung des Hinweises auf die
Patenterteilung:
**25.09.91 Patentblatt 91/39**

(84) Benannte Vertragsstaaten:
**AT CH DE ES FR GB IT LI NL**

(56) Entgegenhaltungen:
**EP-A- 0 039 587**
**EP-A- 0 116 233**
**EP-A- 0 153 564**

(73) Patentinhaber: **Zimmermann, Karl**
**Miltzstrasse 29**
**W-5000 Köln 80 (Flittard)(DE)**

(72) Erfinder: **Zimmermann, Karl**
**Miltzstrasse 29**
**W-5000 Köln 80 (Flittard)(DE)**

(74) Vertreter: **Patentanwälte Beetz sen. - Beetz**
**jun. Timpe - Siegfried - Schmitt-Fumian-**
**Mayr**
**Steinsdorfstrasse 10**
**W-8000 München 22(DE)**

## Beschreibung

Die Erfindung betrifft einen feuer- und rauchdichten Verschluß für Durchbrüche in Wänden, Decken u.dgl.

Bei der Herstellung von feuersicheren Räumen sind die für Kabel, Rohre, usw. notwendigen Wanddurchbrüche problematisch, weil sie bisher erst nach Fertigstellung der gesamten Installation, d.h. nach dem Verlegen der elektrischen Kabel und Rohrleitungen sicher verschlossen werden konnten. Bis zu diesem Zeitpunkt blieben die Wanddurchbrüche entweder offen oder sie wurden nur vorläufig durch zugeschnittene Asbestplatten und/oder Steinwolle verschlossen. Zum Hindurchführen der Kabel und Leitungen müssen diese Verschlüsse wieder entfernt werden, wobei dann nach dem Hindurchführen der Leitungen und Kabel die Wanddurchbrüche durch Brandschutz-Mörtel, Steinwolle und/oder Asbesteinlagen endgültig verschlossen werden. In den Zeiten zwischen der Fertigstellung des Rohbaus und dem Abschluß der Installationsarbeiten ist ein ausreichender Brandschutz somit nicht gegeben. Bei der Herstellung von technischen Sonderräumen, wie den sog. Reinluft-Räumen, können bis zur Beendigung der Installationsarbeiten bzw. bis zur Inbetriebnahme der darin aufgestellten Aggregate Staub, Wasserdampf, usw. durch die nur unvollständig verschlossenen Durchbrüche hindurchtreten, was dann Schwierigkeiten bei der Inbetriebnahme der Aggregate und ggf. beim Erhalt der Reinluft-Bedingungen bereitet.

Aus der EP-A-0 153 564 A3 ist eine feuer- und rauchdichte Abdichtung von Wanddurchbrüchen bei Bauwerken bekannt, bei welcher zwei ther- misch expandierende Massen von unterschiedli- chem Blähdruck und Blähtemperatur in zumindest zwei Schichten in den Durchbruch eingebracht werden. Im Brandfall schäumt die Masse der äußeren Schicht zuerst auf und dichtet aufgrund ihres höheren Blähdrucks den Innenraum des Durchbruchs ab. Erst bei längerer Hitzeeinwirkung erfolgt das Aufschäumen der Masse der inneren Schicht und damit die vollständige Ausfüllung der Freiräume des Durchbruchs. Die Herstellung dieser Abdichtung ist jedoch arbeits- und zeitaufwendig, weil die einzelnen Schichten direkt vor Ort aus streichfähigen Massen oder aus Laminat sorgfältig aufgebaut werden müssen, was ausgebildetes Personal und ggf. den Einsatz zusätzlicher Hilfsmittel erfordert. Das nachträgliche Einschneiden für Durchgangsöffnungen zur Aufnahme von später installierten Leitungen, Rohren od. dgl. ist nicht ohne weiteres möglich.

Aufgabe der Erfindung ist es, einen feuer- und rauchdichten Verschluß für Durchbrüche in Brandschutz-Wänden und -Decken zu schaffen, der auf einfache Weise unmittelbar nach der Erstellung dieser Wände eingebaut werden kann und eine brandsichere Abdichtung der Durchbrüche gewährleistet.

Erfindungsgemäß wird diese Aufgabe durch die kennzeichnenden Merkmale des Anspruchs 1 gelöst.

Der erfindungsgemäße Brandschutzstopfen ist zweckmäßigerweise einstückig ausgebildet und so geformt, daß er in den kreisrunden oder auch ovalen Wanddurchbruch von Hand eingeschoben wird, wobei er aufgrund eines geringen Übermaßes und seiner leicht konischen Form sich nach dem Einschieben mit einem vorgegebenen Druck an die Innenwandung des Durchbruchs anlegt. Gemäß einer zweckmäßigen Ausgestaltung der Erfindung besteht der Formkörper aus einem Brandschutz- Schaumstoff, der bei Temperaturen von ca. 300 °C und/oder bei Flammeneinwirkung unter mehrfacher Volumenvergrößerung karbonisiert. Aufgrund der Konsistenz dieses Schaumstoffs ist es möglich, die Wanddurchbrüche unmittelbar nach Herstellung der Wände gegen Luft- bzw. Dampfdurchtritt zu verschließen und erst während der Installation in diese Formkörper einen oder mehrere Durchgangsöffnungen einzuschneiden, deren Durchmesser an die der hindurchzuführenden Leitungen und Kabel genau angepaßt ist. Darüber hinaus läßt sich auch die Außenform dieser Brandschutzstopfen vor Ort auf einfache Weise zuschneiden, so daß die Durchbrüche vollständig verschlossen und auch besonders empfindliche Räumlichkeiten, wie Computerräume, Laborräume, Produktionsräume für hochempfindliche Artikel, bereits in einem sehr frühen Stadium sicher verschlossen werden können. Die leichte Bearbeitbarkeit des Formkörper-Materials ermöglicht auch die genau bündige Lage der Außenfläche des Formkörpers zu den angrenzenden Wandflächen.

Je nach speziellen Anforderungen und die Zweckbestimmung der abzudichtenden Räumlich- keiten kann der erfindungsgemäße Brandschutz- stopfen auch mehrschichtig aufgebaut sein und Einlagen bzw. Ummantelungen aufweisen.

Im folgenden wird ein Ausführungsbeispiel des erfindungsgemäßen Brandschutzstopfens anhand der Zeichnung im einzelnen beschrieben. Es zeigen:

Fig. 1a, 1b    einen Brandschutzstopfen im Querschnitt und im Axialschnitt;

Fig. 2    den Verschluß einer Wanddurch- brechung durch zwei Brand- schutzstopfen.

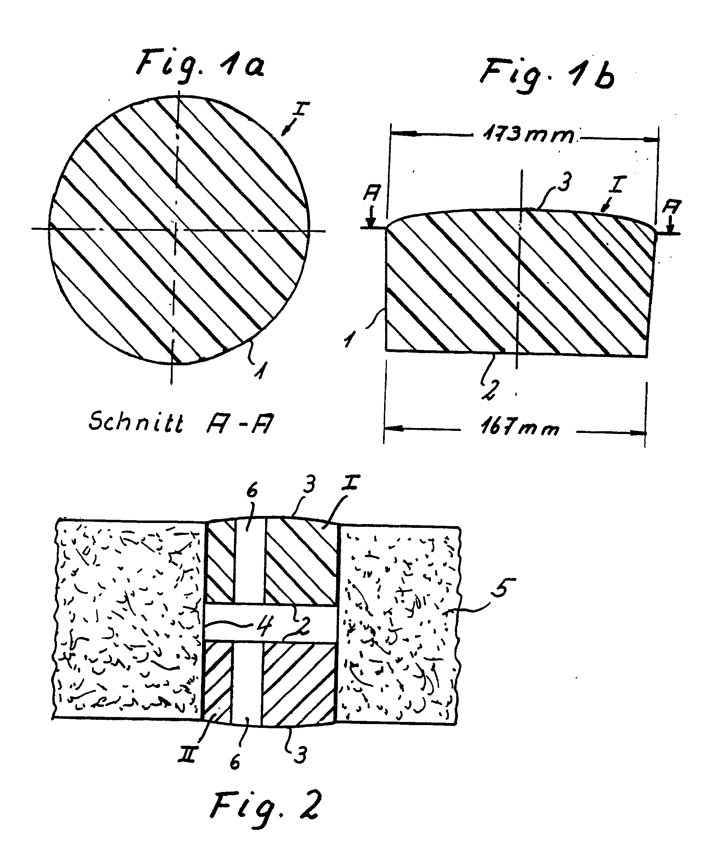

Der in den Fig. 1a, 1b dargestellte Brandschutzstopfen I hat eine leicht konische Form mit einer glatten Seitenwand 1, einer ebenen kreisförmigen Bodenfläche 2 und einer nach oben gewölbten Stirnfläche 3. Das Material ist ein feinporiger Zweikomponenten-Schaumstoff, der durch Aufschäumen in Hohlformen mit einstellbarer Härte und Raumgewicht hergestellt wird. Derartige Schaumstoffe sind als Intumeszenzmaterialien zum Verschließen von Spalten und Rissen im Mauerwerk bekannt. Bei Beflammung bildet sich ein feuerwiderstandsfähiger Kohlenstoffschaum, der das Mehrfache des ursprünglichen Volumens einnimmt und die feuersicheren Eigenschaften begründet. Derartige Schaumstoffe sind auch als Intumeszenzmaterialien, z.B. unter der Bezeichnung "Fomox PA" bzw. "Fomox PE" (eingetragenes Warenzeichen) bekannt.

Wie aus Fig. 2 ersichtlich, werden die Brandschutzstopfen I, II in einen Durchbruch 4 einer Betonwand 5 von außen eingedrückt, wobei die kleinere ebene Innenfläche nach innen weist, wenn - wie dargestellt - jeweils zwei Stopfen in einen Wanddurchbruch 4 eingedrückt werden. Aufgrund des verwendeten Materials und der konischen Form wird jeder Stopfen beim Einschieben in den Durchbruch 4 zumindest in seinem Randbereich zusammengedrückt, wobei die Eigenelastizität des Schaumstoffes einen großflächigen Andruck an die ggf. unebenen Innenflächen des Durchbruchs und damit eine sichere Abdichtung gegen Flammen und Rauchgase bewirkt. Wie in Fig. 2 ferner dargestellt, kann durch ein geeignetes Werkzeug, z.B. einen Kernschneider, eine durchgehende Bohrung 6 in beiden Stopfen hergestellt werden, durch die dann elektrische Kabel, Rohrleitungen, od.dgl., hindurchgeführt werden können. Aufgrund der Druckanlage der beiden Stopfen an den Wänden des Durchbruchs 4 erfolgt eine sichere Abstützung und Halterung der Leitungen bzw. Kabel in jedem der Stopfen. Sollten die Mauerdurchbrüche viereckig oder rechtwinklig sein, kann der jeweilige Stopfen am Betriebspunkt mit einem Messer od.dgl. zurechtgeschnitten werden, wobei ein gewisses Übermaß eingehalten werden sollte, um den großflächigen Andruck an die unebenen Seitenflächen des Mauerdurchbruchs zu gewährleisten.

Die Erfindung ist nicht auf das dargestellte Ausführungsbeispiel beschränkt. Vielmehr kann der Brandschutzstopfen auch ebene Stirnflächen und/oder eckige oder ovale Querschnitte haben sowie aus mehreren Schichten unterschiedlicher Materialien mit und ohne Einlagen aus z.B. Asbestfasern, Steinwolle, od.dgl., aufgebaut sein.

Ferner ist es möglich, in die Wanddurchbrüche von beiden Seiten aus je einen Formkörper einzupressen und die ggf. zwischen beiden Formkörpern verbleibenden Hohlräume mit einem flüssig injiziertem Mehrkomponenten-Schaumstoff auszufüllen, der eine feste Klebeverbindung zu den Oberflächen der Wanddurchbrüche und der ggf. eingezogenen Leitungen herstellt. Dieses erst vor Ort ausgeschäumte Material sollte zweckmäßig die gleichen Brandschutzeigenschaften und/oder Zusammensetzung wie die Formkörper haben. Der sich beim Ausschäumen entwickelnde Druck sorgt dabei für eine besonders sichere Abdichtung. Die Festlegung eines oder mehrerer Brandschutzstopfen bzw. Formkörper im Wanddurchbruch kann auch durch einen Brandschutzkleber erfolgen, der vor dem Einsetzen auf die Mantelflächen des Stopfens aufgebracht wird.

## Patentansprüche

1.  Feuer- und rauchdichter Verschluß für Durchbrüche in Wänden, Decken od. dgl., bestehend aus einem in den Durchbruch eingebrachten und dessen Freiräume ausfüllenden Intumeszenz-Material, das bei Flammeneinwirkung oder Erhitzung unter Volumenvergrößerung karbonisiert,

    **gekennzeichnet durch**

    mindestens einen als vorgefertigter konischer Stopfen (I; II) ausgebildeten Formkörper aus einem nachgiebig verformbaren und schneidfähigen Zweikomponenten-Schaumstoff, der im Querschnitt ein Übermaß gegenüber dem Durchbruch aufweist und in eingeschobenem Zustand mit seinen Seitenwänden an der Innenwand des Durchbruchs mit einem vorgegebenen Druck anliegt.

2.  Verschluß nach Anspruch 1,
    dadurch gekennzeichnet,
    daß der Formkörper mehrschichtig aufgebaut ist.

3.  Verschluß nach Anspruch 1 oder 2,
    dadurch gekennzeichnet,
    daß im Formkörper Einlagen eingebettet sind.

4.  Verschluß nach einem der Ansprüche 1 bis 3,
    dadurch gekennzeichnet,
    daß der Formkörper eine ebene Grundfläche (2), eine glatte umlaufende Seitenwand (1) und eine gewölbte Stirnfläche (3) besitzt.

5.  Verschluß nach einem der Ansprüche 1 bis 4,
    dadurch gekennzeichnet,
    daß der Formkörper (1, 2) einen kreisrunden, ovalen oder vieleckigen Querschnitt hat.

6.  Verschluß nach einem der Ansprüche 1 bis 5,
    dadurch gekennzeichnet,
    daß im Formkörper Durchgangs-Bohrungen (6) zur dichten Aufnahme von Rohren bzw. Leitungen ausgebildet sind.

7.  Verschluß nach einem der Ansprüche 1 bis 6,

dadurch gekennzeichnet,
daß im Formkörper Hohlräume vorgesehen sind.

8. Verschluß nach einem der Ansprüche 1 bis 7, dadurch gekennzeichnet,
daß die Formkörper (I; II) in den Wanddurchbrüchen (4) unter Verwendung eines Brandschutzklebers fixiert sind.

9. Verschluß nach einem der Ansprüche 1 bis 7, dadurch gekennzeichnet,
daß die Formkörper (I; II) in den Wanddurchbrüchen (4) durch Ausschäumen eines in die verbleibenden Freiräume flüssig injizierten Mehrkomponenten-Schaumstoffs fixiert sind, der etwa die gleiche Zusammensetzung und/oder Eigenschaften wie das Formkörper-Material hat und der die ggf. vorhandenen Hohlräume zwischen dem Wanddurchbruch und dem jeweiligen Formkörper vollständig ausfüllt.

## Claims

1. A fire-proof and smoke-proof closure for openings in walls, ceilings or the like, consisting of an intumescent material introduced into and filling the free spaces of the opening, such material carbonising with an increase in volume when subjected to the action of flames or heat, characterised by at least one moulding formed as a prefabricated conical plug (I; II) from a flexibly deformable and cuttable two-component foam material which in cross-section has an oversize in comparison with the opening and, when inserted, bears by its side walls against the inner wall of the opening at a predetermined pressure.

2. A closure according to claim 1, characterised in that the moulding is of multi-layer construction.

3. A closure according to claim 1 or 2, characterised in that inlays are embedded in the moulding.

4. A closure according to any one of claims 1 to 3, characterised in that the moulding has a flat base (2), a smooth peripheral side wall (1) and a curved end face (3).

5. A closure according to any one of claims 1 to 4, characterised in that the moulding (1, 2) has a circular, oval or polygonal cross-section.

6. A closure according to any one of claims 1 to 5, characterised in that continuous bores (6) are provided in the moulding for the sealing-tight accommodation of pipes, conduits, cables or the like.

7. A closure according to any one of claims 1 to 6, characterised in that cavities are provided in the moulding.

8. A closure according to any one of claims 1 to 7, characterised in that the mouldings (I; II) are fixed in the wall openings (4) by means of a fire protection adhesive.

9. A closure according to any one of claims 1 to 7, characterised in that the mouldings (I; II) are fixed in the wall openings (4) by the foaming of a multi-component foam material injected in the liquid state into the remaining free spaces, such foam material having approximately the same composition and/or properties as the material of the moulding and completely filling any cavities between the wall opening and the associated moulding.

## Revendications

1. Elément d'obturation coupe-feu et étanche à la fumée, destiné à des ouvertures de traversée dans des murs, des dalles de plafond ou analogues, et réalisé en un matériau intumescent qui est introduit dans l'ouverture de traversée et remplit ses espaces vides, et qui carbonise sous l'effet des flammes ou d'un échauffement, en augmentant son volume,
caractérisé par
au moins un corps moulé réalisé sous la forme d'un bouchon conique préfabriqué (I; II) en une mousse à deux composants, déformable de manière souple et pouvant être coupée, qui est surdimensionné en section droite par rapport à l'ouverture de traversée, et qui à l'état inséré s'applique par ses parois latérales et avec une pression prédéterminée, contre la paroi intérieure de l'ouverture de traversée.

2. Elément d'obturation selon la revendication 1, caractérisé en ce que le corps moulé présente une constitution multicouche.

3. Elément d'obturation selon la revendication 1 ou 2, caractérisé en ce que des inserts sont noyés dans le corps moulé.

4. Elément d'obturation selon l'une des revendications 1 à 3, caractérisé en ce que le corps moulé comporte une surface de base plane (2), une paroi latérale périphérique lisse (1) et une face frontale bombée (3).

5. Elément d'obturation selon l'une des revendications 1 à 4, caractérisé en ce que le corps moulé (I, II) présente une section droite de forme circulaire, ovale ou polygonale.

6. Elément d'obturation selon l'une des revendications 1 à 5, caractérisé en ce que dans le corps moulé sont réalisés des perçages de passage (6) destinés à loger de manière étanche, des tubes ou des conduites.

7. Elément d'obturation selon l'une des revendications 1 à 6, caractérisé en ce que des espaces creux sont prévus dans le corps moulé.

8. Elément d'obturation selon l'une des revendications 1 à 7, caractérisé en ce que les corps moulés (I; II) sont fixés dans les ouvertures de traversée murale (4), par l'utilisation d'une colle réfractaire.

9. Elément d'obturation selon l'une des revendications 1 à 7, caractérisé en ce que les corps moulés (I; II) sont fixés dans les ouvertures de traversée murale (4) en faisant mousser une mousse à plusieurs composants qui est injectée à l'état liquide dans les espaces libres résiduels, qui présente sensiblement la même composition et/ou les mêmes propriétés que le matériau du corps moulé, et qui comble totalement les éventuels espaces creux existants entre l'ouverture de traversée murale et le corps moulé respectif.

## Fig. 1a

Schnitt A-A

## Fig. 1b

173mm

167mm

## Fig. 2